# DEMANDE DE BREVET EUROPEEN

(11) **EP 1 566 408 A1**
(43) Date de publication de la demande: **24.08.2005**
(21) Numéro de dépôt: 05290312.7
(22) Date de dépôt: 11.02.2005
(51) Int. Cl.: C08L 33/12, C08L 27/16, C08K 5/132, B32B 27/30, B32B 27/28, B29C 47/06

(54) **Composition coextrudable avec le PVDF et sans effet de blanchiment sous contrainte**

(30) Priorité: 20.02.2004 FR 0401726
(71) Demandeur: Arkema, 92800 Puteaux (FR)
(72) Inventeur: Bonnet, Anthony, 27170 Beaumont le Roger (FR); Tribalier, Karine, 27800 Saint-Eloi de Fourques (FR); Laffargue, Johann, 27300 Bernay (FR); Beaume, François, 27300 Bernay (FR); Loyen, Karine, 27500 Pont-Audemer (FR); Duc, Sandrine, 75017 Paris (FR)

(57) **Abrégé**

La présente invention concerne une composition coextrudable avec le PVDF et comprenant :
- 30 à 50 parties de PVDF,
- 70 à 50 parties d'un copolymère (A) comprenant en poids 90 à 50% de méthacrylate de méthyle (MMA) pour respectivement 10 à 50% d'un (méth)acrylate d'alkyle, l'alkyle ayant de 2 à 24 atomes de carbone,
- 1 à 4 parties d'un absorbeur UV,
- le total faisant 100 parties.

L'invention concerne aussi des films coextrudés constitués :
- d'une couche de la composition coextrudable précédente (aussi appelée couche adhésive) et directement attachée à celle-ci,
- une couche à base de PVDF comprenant comme constituants principaux 50 à 100 parties de PVDF pour respectivement 50 à 0 parties de PMMA (cette couche est aussi appelée par simplification "couche de PVDF").

Ces films présentent des propriétés mécaniques suffisantes pour permettre leur manipulation, leur mise en oeuvre et leur utilisation comme revêtement transparent à la lumière visible mais opaque aux rayonnements UV. La composition de la couche adhésive est basée sur l'utilisation d'un polymethacrylate de méthyle copolymèrisé avec un acrylate souple permettant d'obtenir une formulation liante présentant un compromis de propriétés entre la transparence du film, sa bonne tenue mécanique et sa faculté à ne pas blanchir lorsqu'il est soumis à une déformation importante.

## Description

### Domaine de l'invention

Le PVDF (polyfluorure de vinylidène) en raison de sa très bonne résistance aux intempéries, au rayonnement et aux produits chimiques est utilisé pour protéger des objets ou des matériaux. De plus il est apprécié pour son aspect brillant et sa résistance aux graffitis. On est donc amené à revêtir toutes sortes de substrats avec un film de PVDF. Cependant le PVDF adhère très mal sur la plupart des substrats, il est donc nécessaire de disposer une composition adhésive entre le PVDF et le substrat. La présente invention concerne cette composition.
Avantageusement cette composition est coextrudée avec le PVDF pour former un film bicouche puis ce film est ensuite fixé sur le substrat par exemple par pressage à chaud. On peut aussi disposer le film bicouche dans un moule, la couche de PVDF étant disposée contre la paroi du moule, puis injecter le substrat à l'état fondu dans le moule. On peut aussi, selon la nature du substrat, coextruder le PVDF, la composition adhésive et le substrat pour obtenir directement le substrat revêtu de PVDF et la composition adhésive étant entre le PVDF et le substrat.

### L'art antérieur et le problème technique

Le film bicouche PVDF/composition adhésive doit parfois être plié ou étiré avant d'être fixé sur le substrat. Il doit aussi parfois être plié ou étiré avant d'être disposé dans un moule dans laquel on injecte ensuite le substrat. Selon une autre possibilité le substrat une fois revêtu doit parfois être plié. Le pliage ou l'étirage provoquent un blanchiment.
L'art antérieur a déjà décrit des revêtement de substrats par des films de PVDF mais n'a jamais cité le problème du blanchiment.
Le brevet **GB 1578517** décrit de l'ABS revêtu par un film de PVDF, une couche de polyuréthane peut être disposée entre le PVDF et l'ABS.
Le brevet **U**S **4226904** décrit du PMMA recouvert par un film de PVDF. Pour améliorer l'adhésion on dépose sur le film de PVDF une solution de PMMA dans le dimethylformamide et après évaporation du solvant on presse le film de PVDF sur le PMMA.

Le brevet **US 4415519** décrit un substrat en ABS ou en PVC recouvert par un film de PVDF, un adhésif est disposé entre le PVDF et le substrat. Cet adhésif peut être soit du PMMA soit un mélange en poids de 40% de PMMA, 30% de PVDF et 30% d'ABS soit encore un mélange en poids de 30% de PMMA, de 40% d'un dérivé polyacrylique et de 30% d'ABS.
Le brevet **US 4364886** décrit un substrat en ABS ou en polyester insaturé recouvert par un film de PVDF, un adhésif est disposé entre le PVDF et le substrat. Cet adhésif est un mélange en poids de 30% de PMMA, de 40% d'un élastomère acrylique et de 30% d'ABS.
Le brevet **US 5242976** décrit une composition coextrudable avec le PVDF pour le faire adhérer sur des substrats. La composition est un mélange en poids de 27 à 50% de PMMA, de 17,5 à 36,5% de PVDF et de 25 à 47,45% d'un élastomère acrylique.
Dans tous ces arts antérieurs ci dessus il n'est pas fait mention d'additifs anti UV dans la composition adhésive.
Le brevet **EP 733 475 B1** décrit des substrats revêtus de PVDF, la structure comprend successivement le substrat, une couche adhésive, une couche de PVDF rendue opaque aux UV et au rayonnement visible et une couche de PVDF. On obtient la couche de PVDF opaque en ajoutant au PVDF un produit choisi parmi les oxydes de métaux, les pigments et les benzophénones. Les exemples n'illustrent que le PVDF chargé avec 15% en poids d'oxyde de zinc.
Le brevet **US 5256472** décrit des films bicouches comprenant une première couche constituée essentiellement de PVDF et d'une quantité minoritaire de PMMA et une deuxième couche destinée à assurer l'adhésion sur un substrat. Cette couche adhésive est constituée en poids de 50 à 95 (de préférence 70 à 90) parties de PMMA, de 5 à 50 (de préférence 10 à 30) parties de PVDF et de 0,1 à 15 parties d'un absorbeur UV. Il est expliqué que la présence de l'absorbeur UV est nécessaire parce que cette couche adhésive est sensible au rayonnement et que si on ne met pas d'absorbeur UV alors l'adhésif se détruit et la couche constituée essentiellement de PVDF se décolle du substrat. Le PMMA désigne les homopolymères du méthacrylate de méthyle ou les copolymères du méthacrylate de méthyle avec un monomère copolymérisable et aussi les mélanges avec un caoutchouc acrylate (acrylate rubber) mais sans préciser les proportions de PMMA et de caoutchouc. Il est précisé aussi que si la proportion de PMMA est inférieure à 50 parties il y a exsudation de l'anti UV. Ce document ne le précise pas mais cette exsudation nuit à la transparence des films et surtout provoque un décollement.
Le brevet **EP 1382640** décrit une composition coextrudable avec le PVDF et comprenant : 20 à 40 parties de PVDF, 40 à 60 parties de PMMA, 5 à 18 parties d'un élastomère acrylique, 1 à 4 parties d'un absorbeur UV, le total faisant 100 parties. Il décrit aussi des films coextrudés constitués :
- d'une couche de la composition coextrudable précédente (aussi appelée couche adhésive) et directement attachée à celle ci,
- une couche à base de PVDF comprenant comme constituants principaux 50 à 100 parties de PVDF pour respectivement 50 à 0 parties de PMMA.
   Dans l'art antérieur il n'est jamais fait mention du compromis qui doit être trouvé en terme de transparence, de propriétés mécaniques et surtout de non blanchiment lorsque l'objet obtenu est plié. On a maintenant trouvé une composition coextrudable avec le PVDF qui est souple, transparente et ne conduit à aucun blanchiment lorsque le film est plié ou étiré et présente un excellent compromis allongement à la rupture, transparence et protection UV.

### Brève description de l'invention

La présente invention concerne une composition coextrudable avec le PVDF et comprenant :
- 30 à 50 parties de PVDF,
- 70 à 50 parties d'un copolymère (A) comprenant en poids 90 à 50% de méthacrylate de méthyle (MMA) pour respectivement 10 à 50% d'un (méth)acrylate d'alkyle, l'alkyle ayant de 2 à 24 atomes de carbone,
- 1 à 4 parties d'un absorbeur UV,
- le total faisant 100 parties.

L'invention concerne aussi des films coextrudés constitués :
- d'une couche de la composition coextrudable précédente (aussi appelée couche adhésive) et directement attachée à celle-ci,
- une couche à base de PVDF comprenant comme constituants principaux 50 à 100 parties de PVDF pour respectivement 50 à 0 parties de PMMA (cette couche est aussi appelée par simplification "couche de PVDF").

Selon une deuxième forme de l'invention la couche de PVDF se présente sous forme de 2 couches :
- l'une disposée contre la couche coextrudable et comprenant comme constituants principaux 50 à 90 parties de PVDF pour respectivement 50 à 10 parties de PMMA,
- l'autre (appelée aussi couche extérieure) comprenant comme constituants principaux 75 à 100 parties de PVDF pour respectivement 25 à 0 parties de PMMA.

Ces films présentent des propriétés mécaniques suffisantes pour permettre leur manipulation, leur mise en oeuvre et leur utilisation comme revêtement transparent à la lumière visible mais opaque aux rayonnements UV. La composition de la couche adhésive est basée sur l'utilisation d'un polyméthacrylate de méthyle copolymérisé avec un acrylate souple permettant d'obtenir une formulation liante présentant un compromis de propriétés entre la transparence du film, sa bonne tenue mécanique et sa faculté à ne pas blanchir lorsqu'il est soumis à une déformation importante.

L'invention concerne aussi les substrats revêtus de ce film, la composition coextrudable (adhésive) étant disposée contre le substrat.
L'invention concerne aussi l'utilisation de cette composition coextrudable avec le PVDF pour faire adhérer des films à base de PVDF sur des substrats.

### Description détaillée de l'invention

**S'agissant du PVDF** on désigne ainsi les PVDF, homopolymères du fluorure de vinylidène (VDF) et les copolymères du fluorure de vinylidène (VDF) contenant de préférence au moins 50 % en poids de VDF et au moins un autre monomère copolymérisable avec le VDF. Avantageusement le comonomère est fluoré, il peut être choisi par exemple parmi le fluorure de vinyle; le trifluoroéthylène (VF3); le chlorotrifluoroéthylène (CTFE); le 1,2-difluoroéthylène; le tetrafluoroéthylène (TFE); l'hexafluoropropylene (HFP); les perfluoro(alkyl vinyl) éthers tels que le perfluoro(méthyl vinyl)éther (PMVE), le perfluoro(éthyl vinyl) éther (PEVE) et le perfluoro(propyl vinyl) éther (PPVE); le perfluoro(1,3-dioxole); le perfluoro(2,2-diméthyl-1,3-dioxole) (PDD). De préférence, le comonomère éventuel est choisi parmi le chlorotrifluoroéthylène (CTFE), l'hexafluoropropylène (HFP), le trifluoroéthylène (VF3) et le tétrafluoroéthylène (TFE).
De préférence le PVDF contient, en poids, au moins 50% de VDF, plus préférentiellement au moins 75% et mieux encore au moins 85%. Le comonomère est avantageusement l'HFP.
Avantageusement, le PVDF a une viscosité allant de 100 Pa.s à 2000 Pa.s, la viscosité étant mesurée à 230°C, à un gradient de cisaillement de 100 s⁻¹ à l'aide d'un rhéomètre capillaire. En effet, ces PVDF sont bien adaptés à l'extrusion et à l'injection. De préférence, le PVDF a une viscosité allant de 300 Pa.s à 1200 Pa.s, la viscosité étant mesurée à 230°C, à un gradient de cisaillement de 100s⁻¹ à l'aide d'un rhéomètre capillaire.

**S'agissant du copolymère (A)** il comprend avantageusement en poids 85 à 70% de méthacrylate de méthyle pour respectivement 15 à 30% d'un (méth)acrylate d'alkyle, l'alkyle ayant de 2 à 24 atomes de carbone. Il comprend de préférence en poids 80 à 70% de méthacrylate de méthyle pour respectivement 20 à 30% d'un (méth)acrylate d'alkyle, l'alkyle ayant de 2 à 24 atomes de carbone. A titre d'exemple de (méth)acrylate d'alkyle, l'alkyle ayant de 2 à 24 atomes de carbone on peut citer l'acrylate de butyle, l'acrylate de 2-éthylhexyle, l'acrylate de n-octyle, l'acrylate d'hydroxyéthyle et le méthacrylate de 2-éthylhexyle. Le MVI (melt volume index ou indice de fluidité en volume à l'état fondu) peut être compris entre 2 et 15 cm³/10 min mesuré à 230°C sous une charge de 3,8 kg. Le copolymère (A) peut être statistique c'est-à-dire que le MMA et l'autre monomère (le (méth)acrylate d'un alkyle ayant de 2 à 24 atomes de carbone) sont répartis de façon aléatoire. Le copolymère (A) peut être à blocs (appelé aussi copolymère séquencé) c'est-à-dire qu'il y a des blocs de PMMA et des blocs de l'autre monomère. S'agissant de ce copolymère (A) à blocs on utilise avantageusement un tribloc comprenant un bloc PMMA, un bloc de l'autre monomère et un bloc PMMA. De préférence, c'est un copolymère tribloc PMMA-b-poly(acrylate de butyle)-b-PMMA. Ces copolymères à blocs peuvent être fabriqués par polymérisation anionique ou par polymérisation radicalaire controlée. Le copolymère (A) peut être en mélange avec du PMMA conventionnel tel que defini dans le paragraphe suivant pourvu que la quantité du PMMA conventionnel ne provoque pas un blanchiment dans les conditions de pliage et d'étirage comme expliqué plus haut.

**S'agissant du PMMA** on désigne ainsi les homopolymères du méthacrylate de méthyle et les copolymères contenant au moins 50% en poids de méthacrylate de méthyle. A titre d'exemple de comonomère on peut citer par exemple les (méth)acrylates d'alkyle, l'acrylonitrile, le butadiène, le styrène, l'isoprène. Des exemples de (méth)acrylates d'alkyle sont décrits dans KIRK-OTHMER, Encyclopedia of chemical technology, 4^{ème} édition dans le Volume 1 pages 292-293 et dans le Volume 16 pages 475-478. Avantageusement le PMMA peut contenir 0 à 20% en poids, de préférence 5 à 15%, encore plus préférentiellement 10 à 15 % d'acrylate de méthyle et/ou d'acrylate d'éthyle. Le PMMA peut être fonctionnalisé c'est-à-dire qu'il contient par exemple des fonctions acide, chlorure d'acide, alcool, anhydride. Ces fonctions peuvent être introduites par greffage ou par copolymérisation du MMA avec un monomère porteur d'une de ces fonctions. Avantageusement c'est une fonction acide apportée par le comonomère acide acrylique ou acide méthacrylique. Deux fonctions acide acrylique ou méthacrylique voisines peuvent se deshydrater pour former un anhydride. La proportion de fonctions peut être de 0 à 15% en poids du PMMA comprenant les fonctions éventuelles.
Le MVI (melt volume index ou indice de fluidité en volume à l'état fondu) du PMMA peut être compris entre 2 et 15 cm³/10 min mesuré à 230°C sous une charge de 3,8 kg.

**S'agissant de l'absorbeur UV** ces produits sont connus en eux-mêmes. De tels produits sont cités dans le brevet US 5256472. On utilise avantageusement les benzotriazoles et les benzophénones. A titre d'exemple on peut utiliser les Tinuvin® 213 ou Tinuvin® 109 et de façon préférable le Tinuvin® 234 de la société Ciba Speciality Chemicals.

La composition coextrudable avec le PVDF comprend avantageusement: 40 à 50 parties de PVDF,
60 à 50 parties d'un copolymère (A) comprenant en poids 90 à 50% de méthacrylate de méthyle pour respectivement 10 à 50% d'un (méth)acrylate d'alkyle, l'alkyle ayant de 2 à 24 atomes de carbone,
1 à 4 parties d'un absorbeur UV,
le total faisant 100 parties.

La composition coextrudable avec le PVDF (ou couche adhésive) ne contient pas de modifiant choc de type core-shell (coeur-écorce) de façon à éviter le problème de blanchiment. La composition coextrudable peut être préparée par mélange du PVDF, du copolymère (A) à l'état fondu dans lequel on ajoute l'absorbeur UV. On utilise avantageusement les dispositifs de mélange des thermoplastiques. De même pour les couches à base de PVDF et de PMMA.

S'agissant du film coextrudé constitué de la composition coextrudable et de la couche de PVDF l'épaisseur de la couche de PVDF est avantageusement comprise entre 2 et 50 µm, de préférence entre 2 et 30 µm, et celle de la composition coextrudable entre 10 et 100 µm, de préférence entre 10 et 70 µm.

Avantageusement, la couche à base de PVDF comprend comme constituants principaux 70 à 100 parties de PVDF pour respectivement 30 à 0 parties de PMMA et de préférence 75 à 85 parties de PVDF pour respectivement 25 à 15 parties de PMMA.

Selon une deuxième forme de l'invention la couche de PVDF se présente sous forme de 2 couches :
- l'une disposée contre la couche coextrudable et comprenant comme constituants principaux 50 à 90 parties de PVDF pour respectivement 50 à 10 parties de PMMA,
- l'autre (appellée aussi couche extérieure) comprenant comme constituants principaux 75 à 100 parties de PVDF pour respectivement 25 à 0 parties de PMMA
C'est-à-dire que les films de l'invention comprennent dans l'ordre :
- une couche coextrudable de la composition de l'invention (la couche adhésive),
- une couche disposée contre la couche coextrudable et comprenant comme constituants principaux 50 à 90 parties de PVDF pour respectivement 50 à 10 parties de PMMA,
- une couche (appelée aussi couche extérieure) comprenant comme constituants principaux 75 à 100 parties de PVDF pour respectivement 25 à 0 parties de PMMA.

Avantageusement la couche extérieure comprend comme constituants principaux 85 à 100 parties de PVDF pour respectivement 15 à 0 parties de PMMA et de préférence 90 à 100 parties de PVDF pour respectivement 10 à 0 parties de PMMA.

L'épaisseur de la couche de composition coextrudable est avantageusement comprise entre 10 et 100 µm, de préférence entre 10 et 70 µm, et celle de chacune des autres couches est avantageusement comprise entre 2 et 50 µm, de préférence entre 2 et 30 µm.

L'invention concerne aussi les substrats revêtus de ce film, la composition coextrudable étant disposée contre le substrat.

**S'agissant du substrat** on peut citer à titre d'exemple :
- les polymères chlorés : PVC, PVC plastifié, PE chloré
- les polymères et copolymères contenant du styrène tel que ABS, SAN, PS,
- les polyesters saturés (PET, PBT, ...) et copolyesters ou mélanges, les résines polyesters insaturées (SMC),
- les résines époxy et phénoliques,
- les copolymères de l'éthylène et d'alkylacrylate ou d'acétate de vinyle (EMA, EVA) fonctionnalisés ou non,
- les PA (polyamides) et CoPA (copolyamides), PEBA, polyesteramides et TPU (polyurethane thermoplastique, abréviation de Thermoplastic polyuréthane),
- EVOH (copolymère de l'éthylène et de l'alcool vinylique),
- l'aluminium, l'acier ou des mélanges de métaux,
- les composites à base de lignine,
- les composés acryliques (PMMA, ...),
- le verre,
- les mousses PVC, PU.

### Exemples

On a utilisé les produits suivants :
**Kynar® 740** : PVDF homopolymère de la société ATOFINA et de MVI (Melt Volume Index ou indice de fluidité en volume à l'état fondu) 1,1 cm³/10 min (230°C, 5kg).
**OROGLAS® BS8 :** PMMA de la société ATOGLAS de MVI 4.5 cm³/10 min (230°C, 3.8 kg) sous forme de perle contenant un comonomère, l'acrylate de méthyle à hauteur de 6%. Ce PMMA ne contient pas d'additif choc.
**Tinuvin® 213** : absorbeur UV de type hydroxy phényl benzotriazole vendu par Ciba Speciality Chemicals.
**Tinuvin® 234** : absorbeur UV de type hydroxy phényl benzotriazole vendu par Ciba Speciality Chemicals.
**Kynarflex® 2850** : PVDF copolymère (le comonomère est l'HFP) de MVI 0,5 cm³/10 min (230°C, 5 kg).
**Kynarflex® 2800** : PVDF copolymère (le comonomère est l'HFP) de MVI 1,1 cm³/10 min (230°C, 5 kg).
**D320** : abréviation de Durastrength® D320, désigne un élastomère coeur-écorce mou / dur dont le coeur est un copolymère de l'acrylate de butyle et du butadiène et l'écorce est en PMMA de dimension 80 nm vendu par la société CECA.
Les compositions dans les exemples sont en % poids.

### Exemple 1 (selon l'invention)

Un film bicouche contenant une couche composée de 80% de PVDF Kynar® 740 et 20% d'oroglas BS8 de 15 µm d'épaisseur et un liant de 35 µm d'épaisseur suivant la formulation suivante : Kynar®740 48,6%, 48,6% d'un copolymère MMA-acrylate d'éthyle à 25% en poids d'acrylate d'éthyle, 2.8% de Tinuvin 234. Ce film présente un allongement rupture de 250%, un haze de 2 et après 7 jours passés en étuve aucune exsudation n'est observable. Ce film présente une absorbance UV suffisante pour son utilisation dans des applications extérieures. Ce film lorsqu'il est étiré ne présente aucun blanchiment au niveau de la zone déformée.

### Exemple 2 : (selon l'invention)

Un film bicouche contenant une couche composée de 80% de PVDF Kynar® 740 et 20% d'Oroglas BS8 de 15 µm d'épaisseur et un liant de 35 µm d'épaisseur suivant la formulation suivante : Kynar® 740 45,2%, 52% d'un copolymère MMA-acrylate d'éthyle à 25% en poids d'acrylate d'éthyle, 2.8% de Tinuvin 234. Ce film présente un allongement rupture de 210%, un haze de 1,5 et après 7 jours passés en étuve aucune exsudation n'est observable. Ce film présente une absorbance UV suffisante pour son utilisation dans des applications extérieures. Ce film lorsqu'il est étiré ne présente aucun blanchiment au niveau de la zone déformée.

### Exemple 3 : (selon l'invention)

Un film bicouche contenant une couche composée de 80% de PVDF Kynar® 740 et 20% d'Oroglas BS8 de 15 µm d'épaisseur et un liant de 35 µm d'épaisseur suivant la formulation suivante : Kynar® 740 40,2%, 57% d'un copolymère MMA-acrylate d'éthyle à 25% en poids d'acrylate d'éthyle, 2.8% de Tinuvin 234. Ce film présente un allongement rupture de 150%, un haze de 8 et après 7 jours passés en étuve aucune exsudation n'est observable. Ce film présente une absorbance UV suffisante pour son utilisation dans des applications extérieures. Ce film lorsqu'il est étiré ne présente aucun blanchiment au niveau de la zone déformée.

### Exemple 4 : (comparatif)

Un film bicouche contenant une couche composée de 80% de PVDF Kynar®740 et 20% d'Oroglas BS8 de 15 µm d'épaisseur et un liant de 35 µm d'épaisseur suivant la formulation suivante : Kynar® 740 40,2%, 47% d'Oroglas BS8, 10% de modifiant choc D320 de la société CECA, et 2.8% de Tinuvin 213. Ce film présente une allongement rupture de 150%, un haze de 6,5 et après 7 jours passés en étuve aucune exsudation n'est observable. Ce film présente une absorbance UV suffisante pour son utilisation dans des applications extérieures. Ce film présente à partir d'une déformation d'environ 100% réalisée à 20°C un blanchiment rendant la partie étirée opaque.

### Exemple 5 : (selon l'invention)

Un film bicouche contenant une couche composée de 100% de PVDF Kynarflex®2850 de 15 µm d'épaisseur et un liant de 35 µm d'épaisseur suivant la formulation suivante : Kynar® 740 40,2%, 57% d'un copolymère MMA-acrylate d'éthyle à 25% en poids d'acrylate d'éthyle, 2.8% de Tinuvin 234. Ce film présente un allongement rupture de 150%, un haze de 8 et après 7 jours passés en étuve aucune exsudation n'est observable. Ce film présente une absorbance UV suffisante pour son utilisation dans des applications extérieures. Ce film lorsqu'il est étiré ne présente aucun blanchiment au niveau de la zone déformée.

### Exemple 6 : (selon l'invention)

Un film bicouche contenant une couche composée de 100% de PVDF Kynarflex®2800 de 15 µm d'épaisseur et un liant de 35 µm d'épaisseur suivant la formulation suivante : Kynar® 740 40,2%, 57% d'un copolymère MMA-acrylate d'éthyle à 25% en poids d'acrylate d'éthyle, 2.8% de Tinuvin 234. Ce film présente un allongement rupture de 150%, un haze de 8 et après 7 jours passés en étuve aucune exsudation n'est observable. Ce film présente une absorbance UV suffisante pour son utilisation dans des applications extérieures. Ce film lorsqu'il est étiré ne présente aucun blanchiment au niveau de la zone déformée.

## Revendications

1. Composition coextrudable avec le PVDF et comprenant :
• 30 à 50 parties de PVDF,
• 70 à 50 parties d'un copolymère (A) comprenant en poids 90 à 50% de méthacrylate de méthyle (MMA) pour respectivement 10 à 50% d'un (méth)acrylate d'alkyle, l'alkyle ayant de 2 à 24 atomes de carbone,
• 1 à 4 parties d'un absorbeur UV,
• le total faisant 100 parties.

2. Composition selon la revendication 1 dans laquelle les proportions sont avantageusement:
• 40 à 50 parties de PVDF,
• 60 à 50 parties du copolymère (A),
• 1 à 4 parties d'un absorbeur UV,
• le total faisant 100 parties.

3. Composition selon l'une quelconque des revendications précédentes dans laquelle le copolymère (A) comprend en poids 85 à 70% de méthacrylate de méthyle pour respectivement 15 à 30% d'un (méth)acrylate d'alkyle, l'alkyle ayant de 2 à 24 atomes de carbone.

4. Composition selon la revendication 3 dans laquelle le copolymère (A) comprend en poids 80 à 70% de méthacrylate de méthyle pour respectivement 20 à 30% d'un (méth)acrylate d'alkyle, l'alkyle ayant de 2 à 24 atomes de carbone.

5. Composition selon l'une quelconque des revendications précédentes dans laquelle dans le copolymère (A) le (méth)acrylate d'alkyle, l'alkyle ayant de 2 à 24 atomes de carbone, est choisi parmi l'acrylate de butyle, l'acrylate de 2-éthylhexyle, l'acrylate de n-octyle, l'acrylate d'hydroxyéthyle et le méthacrylate de 2-éthylhexyle.

6. Films coextrudés constitués :
• d'une couche de la composition coextrudable selon l'une quelconque des revendications précédentes et directement attachée à celle-ci,
• une couche à base de PVDF comprenant comme constituants principaux 50 à 100 parties de PVDF pour respectivement 50 à 0 parties de PMMA

7. Films selon la revendication 6 dans lesquels la couche à base de PVDF comprend comme constituants principaux 70 à 100 parties de PVDF pour respectivement 30 à 0 parties de PMMA.

8. Films selon la revendication 7 dans lesquels la couche à base de PVDF comprend comme constituants principaux 75 à 85 parties de PVDF pour respectivement 25 à 15 parties de PMMA.

9. Films selon l'une quelconque des revendications 6 à 8 dans lesquels l'épaisseur de la couche de PVDF est avantageusement comprise entre 2 et 50 µm et celle de la composition coextrudable entre 10 et 100 µm.

10. Films coextrudés comprenant dans l'ordre :
• une couche coextrudable de la composition selon l'une quelconque des revendications 1 à 5 (la couche adhésive),
• une couche disposée contre la couche coextrudable et comprenant comme constituants principaux 50 à 90 parties de PVDF pour respectivement 50 à 10 parties de PMMA,
• une couche (appelée aussi couche extérieure) comprenant comme constituants principaux 75 à 100 parties de PVDF pour respectivement 25 à 0 parties de PMMA.

11. Films selon la revendication 10 dans lesquels la couche extérieure comprend comme constituants principaux 85 à 100 parties de PVDF pour respectivement 15 à 0 parties de PMMA.

12. films selon l'une quelconque des revendications 10 à 11 dans lesquels l'épaisseur de la couche de composition coextrudable est avantageusement comprise entre 10 et 100 µm et celle de chacune des autres couches est avantageusement comprise entre 2 et 50µm.

13. Substrats revêtus d'un film selon l'une quelconque des revendications 6 à 12, la composition coextrudable étant disposée contre le substrat.

14. Utilisation de la composition coextrudable avec le PVDF selon l'une quelconque des revendications 1 à 5 pour faire adhérer des films à base de PVDF sur des substrats.
